# EUROPEAN PATENT APPLICATION

(11) **EP 4 712 227 A1**
(43) Date of publication of application: **18.03.2026**
(21) Application number: 24913465.1
(22) Date of filing: 26.11.2024
(51) Int. Cl.: H01M 50/19, H01M 50/574, H01M 50/179, H01M 50/249

(54) **GASKET, BATTERY CELL, BATTERY PACK AND VEHICLE COMPRISING SAME**

(30) Priority: 26.12.2023 KR 20230191782; 06.02.2024 KR 20240018291
(71) Applicant: LG Energy Solution, Ltd., Seoul 07335 (KR)
(72) Inventor: LEE, Seon-Min, Daejeon 34122 (KR); KIM, Do-Gyun, Daejeon 34122 (KR); AHN, Seong-Hyeon, Daejeon 34122 (KR); OH, Jeong-Seop, Daejeon 34122 (KR); LIM, Gu-Min, Daejeon 34122 (KR); JO, Min-Ki, Daejeon 34122 (KR)
(74) Representative: Goddar, Heinz J.
(86) International application number: PCT/KR2024/018912
(87) International publication number: WO 2025/143572

(57) **Abstract**

A battery cell according to an embodiment of the present disclosure includes an electrode assembly, a battery housing configured to accommodate the electrode assembly through an opening provided on one side, a terminal configured to be electrically connected to the electrode assembly through a closed portion provided on an opposite side of the opening of the battery housing, and a gasket interposed between the terminal and the battery housing, configured to prevent electrical connection between the terminal and the battery housing, and including a ceramic filler.

## Description

### TECHNICAL FIELD

The present disclosure relates to a gasket, a battery cell, a battery pack, and a vehicle including the same.

This application is based on and claims priority from Korean Patent Application No. 10-2023-0191782, filed on December 26, 2023 and Korean Patent Application No. 10-2024-0018291, filed on February 6, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries and the like. An operating voltage of the unit secondary battery cell, namely a unit battery cell, is about 2.5 V to 4.5 V. Therefore, if a higher output voltage is required, a plurality of battery cells may be connected in series to form a battery pack. Additionally, depending on the charging and discharging capacity required for the battery pack, a plurality of battery cells may be connected in parallel to form a battery pack. Thus, the number of battery cells included in the battery pack may be variously set according to the required output voltage and/or the demanded charging and discharging capacity.

Meanwhile, conventional cylindrical battery cell structures use gasket parts having an insulating function to prevent a short circuit between a negative electrode can and a positive electrode rivet. However, there was a problem that the gasket parts made of polymer were decomposed by high temperature and high pressure during cell ignition and explosion, and thus could not perform the insulating function. Therefore, there has been a need to develop a short-circuit prevention gasket capable of interrupting current even after explosion of the battery cell due to a thermal event.

### DISCLOSURE

### Technical Problem

The present disclosure is directed to providing a gasket capable of maintaining an insulating function even in an environment of high temperature and high pressure when a battery cell is ignited and exploded.

Additionally, the present disclosure is also directed to providing a short-circuit prevention gasket capable of interrupting current even after explosion of the battery cell.

However, technical problems to be solved by the present disclosure are not limited to the above-described problems, and other problems not mentioned herein may be clearly understood by those having ordinary skill in the art from the following description of the present disclosure.

### Technical Solution

A battery cell according to an embodiment of the present disclosure for solving the above-described problem may include an electrode assembly; a battery housing configured to accommodate the electrode assembly through an opening provided on one side; a terminal configured to be electrically connected to the electrode assembly through a closed portion provided on an opposite side of the opening of the battery housing; and a gasket interposed between the terminal and the battery housing, configured to prevent electrical connection between the terminal and the battery housing, and including a ceramic filler.

Preferably, the ceramic filler may be configured to be sinterable under conditions of a predetermined temperature and a predetermined pressure.

According to one aspect of the present disclosure, the ceramic filler may be sintered under conditions of a predetermined temperature and a predetermined pressure to form a ceramic filler network.

According to another aspect of the present disclosure, the gasket may include at least one of Al₂O₃, SiO₂, B₂O₃, TiO (Titanium(II) oxide), and CaP (Calcium phosphate).

According to still another aspect of the present disclosure, the gasket may further include a polymer.

According to one aspect of the present disclosure, the gasket may include a first gasket part exposed to the outside of the battery cell based on the closed portion of the battery housing; and a second gasket part located on the inside of the battery cell based on the closed portion of the battery housing.

According to another aspect of the present disclosure, the first gasket part and the second gasket part may be configured to be separable from each other.

According to still another aspect of the present disclosure, an end surface of the first gasket part and an end surface of the second gasket part may be configured to be aligned with each other.

According to one aspect of the present disclosure, the first gasket part may include a ceramic filler.

According to another aspect of the present disclosure, the second gasket part may include a polymer.

Preferably, the second gasket part may have elasticity.

According to still another aspect of the present disclosure, the second gasket part may include at least one of PBT, PP, PTFE, PPA, PFA, PEEK, PA and PS.

Meanwhile, a gasket according to an embodiment of the present disclosure is interposed between a terminal of a cylindrical battery cell and a battery housing and is configured to prevent electrical connection between the terminal and the battery housing, and the gasket may include a ceramic filler.

Meanwhile, a battery pack according to an embodiment of the present disclosure includes the battery cell.

Meanwhile, a vehicle according to an embodiment of the present disclosure includes the battery pack.

### Advantageous Effects

According to the present disclosure, it is possible to maintain the insulating function of a gasket even in an environment of high temperature and high pressure when a battery cell is ignited and exploded.

Additionally, according to the present disclosure, it is possible to provide a short-circuit prevention gasket that maintains a state capable of interrupting current even after explosion of the battery cell.

However, effects to be obtained by the present disclosure are not limited to the above-described effects, and other effects not mentioned herein may be clearly understood by those having ordinary skill in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view showing the internal structure of a battery cell according to an embodiment of the present disclosure.
FIG. 2 is an exploded perspective view showing the terminal and gasket separated from the battery cell of FIG. 1.
FIG. 3 is an enlarged view of the terminal and gasket in the battery cell of FIG. 1.
FIG. 4 is a view for describing a gasket according to an embodiment of the present disclosure.
FIG. 5 is a view for describing a gasket according to another embodiment of the present disclosure.
FIG. 6 is a view for describing a process in which a gasket is deformed and the deformed state when a thermal event occurs inside a battery cell.
FIG. 7 is a view for describing a process in which a first gasket part according to an embodiment of the present disclosure is mounted on a battery cell.
FIG. 8 is a view for describing a process in which a second gasket part according to an embodiment of the present disclosure is mounted on a battery cell.
FIG. 9 is a view for describing a process in which a second gasket part according to an embodiment of the present disclosure is deformed by a riveting process.
FIG. 10 is a view for describing a final shape in which a second gasket part according to an embodiment of the present disclosure is deformed by a riveting process.
FIG. 11 is a view showing a battery pack according to an embodiment of the present disclosure.
FIG. 12 is a view showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Additionally, to help understanding of the present disclosure, the accompanying drawings are not drawn to actual scale, but dimensions of some components may be exaggerated. Additionally, the same reference numeral may be assigned to the same component in different embodiments.

A statement that two objects of comparison are identical means 'substantially identical'. Therefore, 'substantially identical' may include deviations considered to be low in the art, for example, deviations within 5%. Additionally, uniformity of a certain parameter in a predetermined region may mean that it is uniform in terms of an average.

Although the first, second, and the like are used to describe various components, it is obvious that these components are not limited by these terms. These terms are used only to distinguish one component from another component, and unless expressly stated to the contrary, it is obvious that the first component may be the second component.

As used herein, unless expressly stated to the contrary, each component may be singular or plural.

Placing any component on the "upper (or lower)" of a component or "top (or bottom)" of a component may mean not only that any component is disposed in contact with the top surface (or bottom surface) of the component, but also that other components may be interposed between the component and any component disposed above (or below) the component.

Additionally, when it is described that a component is "linked", "coupled", or "connected" to another component, the components may be directly linked or connected to each other, but it should be understood that still another component may be "interposed" between each component, or each component may be "linked", "coupled", or "connected" through still another component.

As used herein, when referring to "A and/or B", it means A, B or A and B, unless expressly stated to the contrary, and when referring to "C to D", it means C or more and D or less, unless expressly stated to the contrary.

For convenience of description, the direction along the longitudinal direction of the winding axis of the electrode assembly 10 wound in the form of a jelly-roll is referred to as the axial direction in this specification. And, the direction surrounding the winding axis is referred to as the circumferential direction or the perimeter direction. And, the direction approaching or moving away from the winding axis is referred to as the radial direction. In particular, the direction approaching the winding axis is referred to as the centripetal direction, and the direction moving away from the winding axis is referred to as the centrifugal direction.

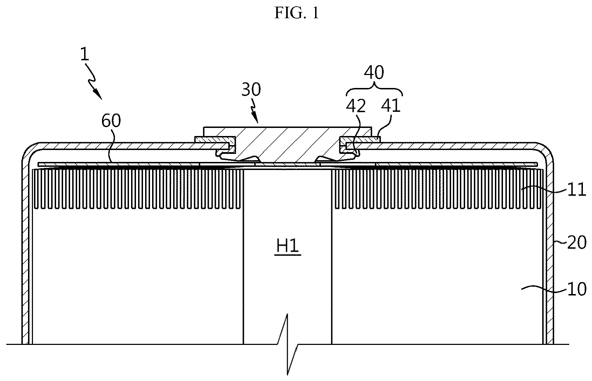

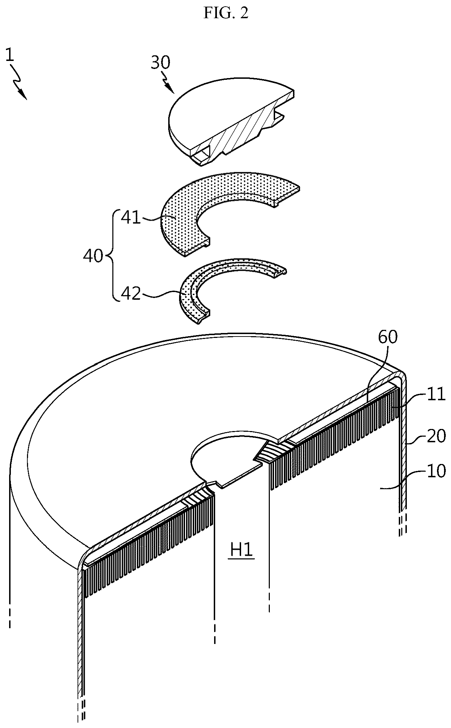

FIG. 1 is a view showing the internal structure of a battery cell 1 according to an embodiment of the present disclosure, and FIG. 2 is an exploded perspective view showing the terminal 30 and gasket 40 separated from the battery cell 1 of FIG. 1.

Referring to FIGS. 1 and 2, a battery cell 1 according to an embodiment of the present disclosure will be described.

Referring to FIGS. 1 and 2, the battery cell 1 according to an embodiment of the present disclosure may include an electrode assembly 10, a battery housing 20, a terminal 30, and a gasket 40. The battery cell 1 may be a secondary battery. The battery cell 1 may be a cylindrical battery.

The electrode assembly 10 may include a positive electrode, a negative electrode, and a separator interposed between the positive electrode and the negative electrode. The electrode assembly 10 may be, for example, a jelly-roll type electrode assembly formed by winding a stack including a positive electrode, a negative electrode, and a separator.

The electrode assembly 10 has a first uncoated portion 11 and a second uncoated portion 12. More specifically, the electrode assembly 10 has a structure in which the first electrode and the second electrode with a separator interposed therebetween and the separator interposed therebetween are wound around a winding axis to define a core and an outer circumferential surface. That is, the electrode assembly 10 applied to the present disclosure may be a jelly-roll type electrode assembly 10. In this case, an additional separator may be provided on the outer circumferential surface of the electrode assembly 10 for insulation from the battery housing 20. The electrode assembly 10 may have a winding structure well known in the art without limitation. Meanwhile, in the present disclosure, the positive electrode active material coated on the positive electrode plate and the negative electrode active material coated on the negative electrode plate may be used without limitation as long as they are active materials known in the art.

The battery housing 20 may be configured to accommodate the electrode assembly 10 through an opening provided on one side. The battery housing 20 may be electrically connected to the electrode assembly 10. An electrolyte may be accommodated together with the electrode assembly 10 within the battery housing 20.

The battery housing 20 is a roughly cylindrical receptacle having an opening C1 formed at the bottom, and is made of a conductive material such as metal. The material of the battery housing 20 may include, for example, steel, stainless steel, nickel-plated iron, or the like. The upper surface positioned opposite to the opening C1 is referred to as a closed portion C2. The side wall portion and the closed portion C2 of the battery housing 20 may be formed integrally. Alternatively, the side wall portion and the closed portion C2 of the battery housing 20 may be provided separately from each other and then be coupled to each other by welding or the like. The upper surface (a surface parallel to the X-Y plane) of the battery housing 20, that is, the outer surface of the closed portion C2, may have a roughly flat shape. The battery housing 20 may accommodate the electrode assembly E through the opening C1 formed at the bottom.

The terminal 30 may be configured to be electrically connected to the electrode assembly 10 through a closed portion provided on an opposite side of the opening of the battery housing 20. Referring to FIGS. 1 and 2, the terminal 30 may be configured to be exposed to the outside of the battery housing 20 through the closed portion of the battery housing 20. The terminal 30 may be electrically connected to, for example, the first uncoated portion 11 of the electrode assembly 10.

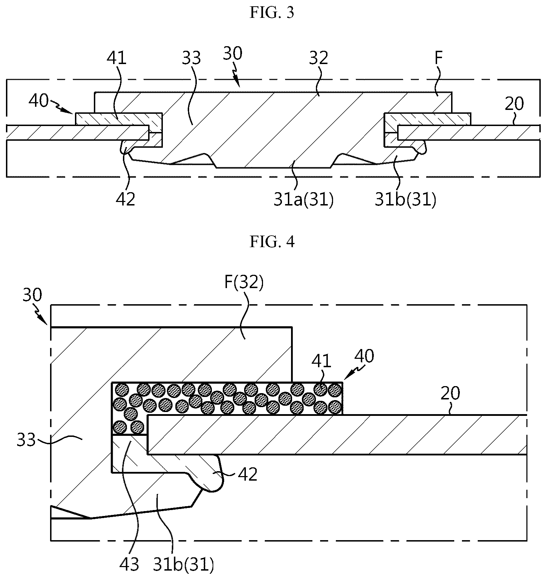

The specific structure of the terminal 30 and the gasket 40 will be described in detail below with reference to FIGS. 3 and 4.

FIG. 3 is an enlarged view of the terminal 30 and gasket 40 in the battery cell 1 of FIG. 1, and FIG. 4 is a view for describing a gasket 40 according to an embodiment of the present disclosure.

Referring to FIGS. 3 and 4, the terminal 30 may include a first terminal portion 31, a second terminal portion 32, and a third terminal portion 33 connecting the first terminal portion 31 and the second terminal portion 32.

The first terminal portion 31 may be configured to be electrically coupled to the electrode assembly 10 within the battery housing 20. The first terminal portion 31 may be configured to be fixed to the battery housing 20. The first terminal portion 31 may be provided, for example, at a position corresponding to a winding center hole formed in the core of the electrode assembly 10.

The first terminal portion 31 may include an electrical connection portion 31a and an inner flange portion 31b. The electrical connection portion 31a may be electrically coupled to, for example, the first uncoated portion 11 of the electrode assembly 10. The electrical connection portion 31a may be electrically coupled to, for example, a current collector (first current collector) 60 to be described later. The inner flange portion 31b may be provided on the outside of the electrical connection portion 31a. The inner flange portion 31b may be riveted to have a curved shape from the outer circumference of the electrical connection portion 31a toward the inner surface of the closed portion of the battery housing 20. By this deformation of the inner flange portion 31b, the terminal 30 may be fixed on the inner surface of the closed portion of the battery housing 20.

The second terminal portion 32 may be exposed to the outside of the battery housing 20. The second terminal portion 32 may be configured to have a larger diameter (or width) than the hole formed in the closed portion of the battery housing 20 for insertion of the terminal 30. For example, an outer flange portion F may be provided around the edge of the second terminal portion 32. The terminal 30 may be fixed to the battery housing 20 by the inner flange portion 31b and the outer flange portion F.

Referring to FIGS. 1 to 4, the gasket 40 may be interposed between the terminal 30 and the battery housing 20. The gasket 40 may be configured to prevent electrical connection between the terminal 30 and the battery housing 20. The gasket 40 may include a material having electrical insulating properties. The terminal 30 and the battery housing 20 may have opposite polarities, and in this case, the gasket 40 may be configured to prevent a short circuit due to contact between the terminal 30 and the battery housing 20. The gasket 40 may include a material having electrical insulating properties and chemical resistance to an electrolyte.

In one aspect of the present disclosure, the gasket 40 may include a ceramic filler. The ceramic filler may be configured to be sinterable under conditions of a predetermined temperature and a predetermined pressure. For example, the ceramic filler may be configured to be sinterable under temperature and pressure conditions upon the occurrence of a thermal event such as an internal explosion of a secondary battery. For example, the ceramic filler may be configured to be sintered under a temperature condition of about 600 degrees Celsius or higher.

In another aspect of the present disclosure, the ceramic filler may be configured to be sintered under conditions of a predetermined temperature and a predetermined pressure to form a ceramic filler network. For example, when a thermal event occurs in the battery cell 1, the ceramic filler may be sintered to form a filler network with each other. Accordingly, if a space existed between the ceramic fillers before sintering, there may be no space between the ceramic fillers after sintering. Additionally, as the ceramic fillers form a network and harden, the gasket 40 may fix the terminal 30 and the battery housing 20 in a certain state.

In still another aspect of the present disclosure, the ceramic filler may include at least one of Al₂O₃, SiO₂, B₂O₃, TiO (Titanium(II) oxide), and CaP (Calcium phosphate). The ceramic filler may have insulating properties.

According to this structure, even when a thermal event such as an explosion of the battery cell 1 occurs, the gasket 40 fixes the ends of the terminal 30 and the battery housing 20 in a certain state by the ceramic filler network of the insulating ceramic filler, and thus contact between the terminal 30 and the battery housing 20 may be effectively prevented. Accordingly, a short circuit between the terminal 30 and the battery housing 20 may be prevented.

The gasket 40 may include a polymer. The gasket 40 may include, for example, an engineering plastic. The engineering plastic may include, for example, polybutylene terephthalate (PBT), poly prophylene (PP), polytetrafluoroethylene (PTFE), polyphthalamide (PPA), perfluoroalkoxy (PFA), polyther etherketone (PEEK), poly amide (PA), polystyrene (PS), and the like.

That is, the gasket 40 may be a mixture including a polymer and a ceramic filler. For example, the gasket 40 may be composed of a mixture in which a ceramic filler is added to a polymer base. Accordingly, the material constituting the base of the gasket 40 is a polymer, and may have a structure in which a ceramic filler is embedded between the polymers. Accordingly, when the gasket 40 is placed in a high temperature and high pressure environment, the polymer component is decomposed and the insulating ceramic filler may form a ceramic filler network under the conditions of a predetermined temperature and a predetermined pressure.

Therefore, according to the above configuration, a short circuit between the terminal 30 and the battery housing 20 may be effectively prevented. Additionally, according to the structure in which the gasket 40 includes a polymer as described above, the possibility of a short circuit may be blocked and the ease of injection of the gasket 40 may be further improved.

In still another aspect of the present disclosure, the gasket 40 may be deformed together upon riveting of the terminal 30 inside the battery housing 20. The gasket 40 may be interposed between the inner surface of the closed portion of the battery housing 20 and the terminal 30 according to this deformation.

Specifically, referring to FIGS. 3 and 4, the gasket 40 may include a first gasket part 41 and a second gasket part 42.

The first gasket part 41 may be interposed between the second terminal portion 32 and the outer surface of the closed portion of the battery housing 20. The first gasket part 41 may be exposed to the outside of the battery cell 1 based on the closed portion of the battery housing 20. More specifically, the first gasket part 41 may include an exposed area that is exposed to the outside of the terminal 30 from the outside of the battery housing 20.

Meanwhile, the first gasket part 41 may be configured such that its longitudinal section has a roughly " 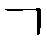 " shape. That is, the first gasket part 41 may be configured to have a horizontal region and a vertical region based on the longitudinal section. Here, the horizontal region may be interposed between the outer flange portion F of the second terminal portion 32 and the battery housing 20. Meanwhile, the vertical region may be interposed between the third terminal portion 33 of the terminal 30 and the battery housing 20. Ultimately, the first gasket part 41 may have a structure having a flat region and a pipe shape extending downward or upward from the innermost point of the flat region. The structure of the first gasket part 41 may not be deformed during riveting of the terminal 30.

The second gasket part 42 may be interposed between the inner flange portion 31b of the first terminal portion 31 and the inner surface of the closed portion of the battery housing 20. The second gasket part 42 may be positioned inside the battery cell 1 based on the closed portion of the battery housing 20. More specifically, the second gasket part 42 may include an exposed area that is exposed to the outside of the terminal 30 from the inside of the battery housing 20. For example, the second gasket part 42 of the gasket 40 may be at least partially exposed to the outside of the inner flange portion 31b of the first terminal portion 31.

Meanwhile, the second gasket part 42 may be configured to have a roughly cylindrical pipe shape. At this time, the second gasket part 42 may be deformed until one end contacts the inner surface of the battery housing 20 by riveting of the terminal 30. Accordingly, the final deformed shape of the second gasket part 42 may be configured such that its longitudinal section has a roughly " 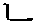 " shape.

In one aspect of the present disclosure, the first gasket part 41 and the second gasket part 42 may be configured to be separable from each other.

For example, the first gasket part 41 and the second gasket part 42 may be manufactured through separate manufacturing processes. That is, the first gasket part 41 and the second gasket part 42 may exist as separate parts. Accordingly, the first gasket part 41 and the second gasket part 42 may be made of different materials.

According to this structure, the first gasket part 41 and the second gasket part 42 may be manufactured separately, which may make it easier to manufacture in terms of injection property. Additionally, since the first gasket part 41 and the second gasket part 42 may exist as separate parts, each part may be made of different materials. Accordingly, the ease of manufacture may be further improved.

In another aspect of the present disclosure, the first gasket part 41 and the second gasket part 42 may be configured to be in contact with each other. For example, referring to FIGS. 3 and 4, a lower surface of the first gasket part 41 and an upper surface of the second gasket part 42 may be configured to be in contact with each other. Here, an end surface of the first gasket part 41 and an end surface of the second gasket part 42 may be configured to be aligned with each other.

For example, the first gasket part 41 and the second gasket part 42 may be manufactured through separate manufacturing processes and then coupled through separate processes, but they may also be assembled as separate parts without being coupled. At this time, since the first gasket part 41 and the second gasket part 42 are not separately bonded, there may be a minute gap between the first gasket part 41 and the second gasket part 42. However, according to the structure in which the end surface of the first gasket part 41 and the end surface of the second gasket part 42 of the present disclosure are aligned with each other, there may be no gap between the end surface of the first gasket part 41 and the end surface of the second gasket part 42. Accordingly, the sealing force and airtightness of the gasket 40 may be guaranteed.

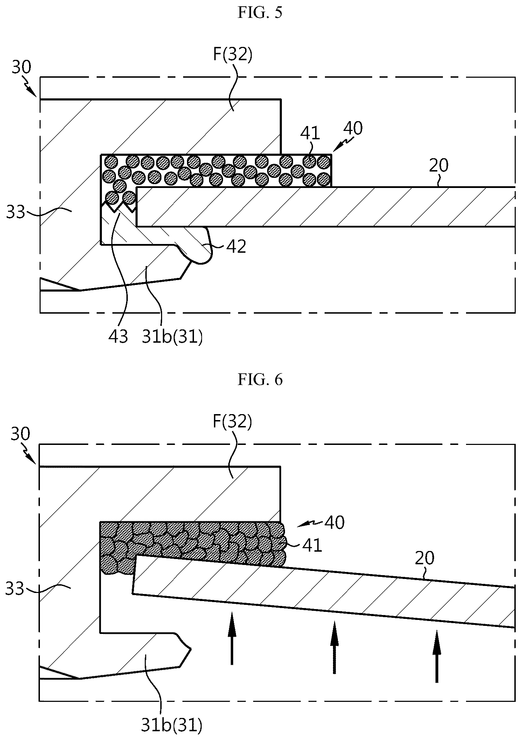

FIG. 5 is a view for describing a gasket 40 according to another embodiment of the present disclosure.

The end surface of the first gasket part 41 and the end surface of the second gasket part 42 may be configured to have complementary shapes. For example, referring to FIG. 5, the end surface of the first gasket part 41 and the end surface of the second gasket part 42 may be configured to have a cogwheel shape, respectively.

According to this structure, the contact area between the first gasket part 41 and the second gasket part 42 may be increased, thereby improving the sealing force and airtightness. Additionally, misalignment of the first gasket part 41 and the second gasket part 42 may be effectively prevented by the uneven structure formed on the end surface of the first gasket part 41 and the end surface of the second gasket part 42.

FIG. 6 is a view for describing a process in which a gasket 40 is deformed and the deformed state when a thermal event occurs inside a battery cell 1.

Referring to FIGS. 4 to 6, in one aspect of the present disclosure, the first gasket part 41 may include a ceramic filler. More specifically, the first gasket part 41 may include a mixture of a ceramic filler and a polymer. The ceramic filler may be configured to have a higher melting point compared to the polymer. In this case, even if a thermal event occurs inside the battery cell 1 and the internal temperature of the battery cell 1 rises or the polymer is damaged or destroyed by contact with a flame and/or a high-temperature gas, the ceramic filler may not be destroyed and may remain interposed between the terminal 30 and the battery housing 20. Meanwhile, the second gasket part 42 may include a polymer. For example, the second gasket part 42 may be configured to include only a polymer without including a ceramic filler.

According to this embodiment, only the first gasket part 41 may include the ceramic filler, and the second gasket part 42 may not include the ceramic filler. According to this structure, when a thermal event occurs inside the battery cell 1, the second gasket part 42 including only the polymer component may all be decomposed. For example, as shown in FIG. 6, the second gasket part 42 may all be melted and flow into the battery cell 1. However, since the first gasket part 41 includes both the ceramic filler and the polymer, the polymer component may be melted and the ceramic filler may be sintered to form a ceramic filler network. Accordingly, as shown in FIG. 6, the first gasket part 41 may be in a state where the ceramic filler is sintered. At this time, the first gasket part 41 may block the space between the terminal 30 and the battery housing 20. That is, the sintered first gasket part 41 may prevent electrical contact between the terminal 30 and the battery housing 20, thereby preventing a short circuit of the battery cell 1.

That is, according to this structure, only the first gasket part 41 includes the ceramic filler, and thus economic feasibility may be secured when manufacturing the gasket 40. Additionally, while securing economic feasibility, it is possible to reliably prevent a short circuit between the terminal 30 and the battery housing 20. Furthermore, since the second gasket part 42 includes only a polymer component, ease of injection may also be secured.

In still another aspect of the present disclosure, the second gasket part 42 may be configured to have elasticity. In this way, as the second gasket part 42 is configured to have elasticity, the sealing force and airtightness of the gasket 40 may be secured. For example, the second gasket part 42 may include at least one of PBT, PP, PTFE, PPA, PFA, PEEK, PA, and PS.

Meanwhile, referring to FIGS. 1 and 2 again, the battery cell 1 of the present disclosure may include a current collector (first current collector) 60. The current collector 60 may be provided between the electrode assembly 10 and the terminal 30. The current collector 60 may be configured to electrically connect the electrode assembly 10 and the terminal 30. The current collector 60 may be disposed between the electrode assembly 10 and the inner surface of the closed portion of the battery housing 20. The current collector 60 may be configured to electrically connect the first electrode of the electrode assembly 10 and the terminal 30.

The first electrode of the electrode assembly 10 may have a first uncoated portion 11 extending along the winding direction at one end thereof. Accordingly, the first uncoated portion 11 may be provided on the first surface of the electrode assembly 10. The first uncoated portion 11 may, for example, extend upward from the electrode assembly 10.

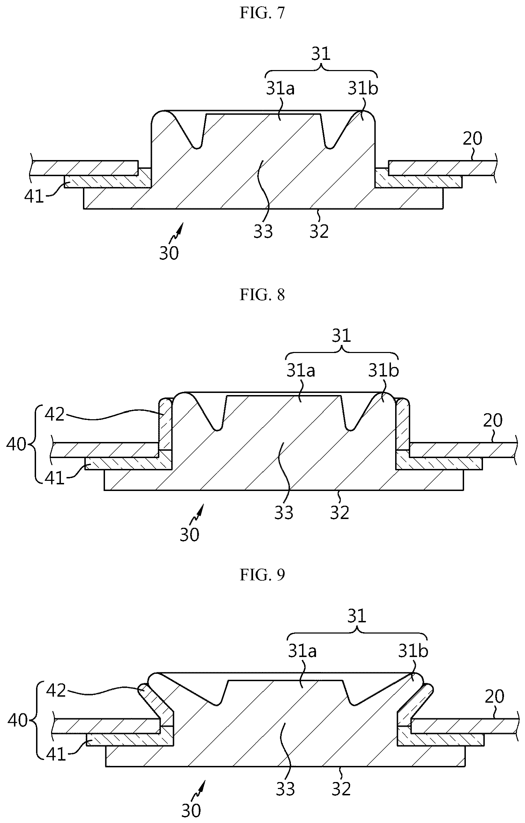

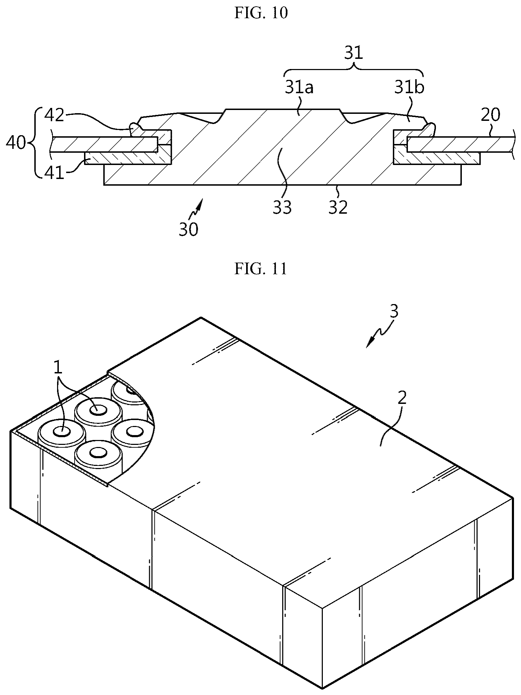

FIG. 7 is a view for describing a process in which a first gasket part 41 according to an embodiment of the present disclosure is mounted on a battery cell 1, and FIG. 8 is a view for describing a process in which a second gasket part 42 according to an embodiment of the present disclosure is mounted on a battery cell 1. FIG. 9 is a view for describing a process in which a second gasket part 42 according to an embodiment of the present disclosure is deformed by a riveting process, and FIG. 10 is a view for describing a final shape in which a second gasket part 42 according to an embodiment of the present disclosure is deformed by a riveting process.

Referring to FIGS. 7 to 10, it can be seen that the process of securing ease of assembly is made as the first gasket part 41 and the second gasket part 42 are configured as separate gaskets 40.

Referring to FIG. 7, first, the first gasket part 41 may be mounted on the outer flange portion F located around the edge of the second terminal portion 32. Here, the terminal 30 before being deformed by the riveting process may be configured in a cylindrical shape having a roughly "T" shape in the longitudinal section. That is, the inner flange portion 31b before being deformed may extend roughly vertically upward from the second terminal portion 32 in the drawing. Meanwhile, the first gasket part 41 may be configured such that its longitudinal section has a roughly " 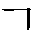 " shape. That is, the first gasket part 41 may be configured to have a horizontal region and a vertical region based on the longitudinal section. Here, the horizontal region may be interposed between the outer flange portion F of the second terminal portion 32 and the battery housing 20. Meanwhile, the vertical region may be interposed between the inner flange portion 31b before deformation of the terminal 30 and the battery housing 20. As shown in FIG. 7, the first gasket part 41 may be configured to fit exactly without any gaps between the terminal 30 and the battery housing 20. That is, the inner diameter of the first gasket part 41 may be configured to match the outer diameter of the cylindrical portion before deformation of the terminal 30.

Next, referring to FIG. 8, the second gasket part 42 may be further mounted. That is, the second gasket part 42 may be placed on top of the first gasket part 41. Here, the second gasket part 42 may be configured to have a roughly cylindrical pipe shape. At this time, the inner diameter of the second gasket part 42 may be configured to match the outer diameter of the cylindrical portion before deformation of the terminal 30.

Next, referring to FIG. 9, the inner flange portion 31b may be bent toward the inner surface of the battery housing 20 by the riveting process. Accordingly, the second gasket part 42 in contact with the inner flange portion 31b of the terminal 30 may also be deformed. That is, since the second gasket part 42 is configured to have elasticity, the shape of the second gasket part 42 may be easily deformed according to the deformation of the inner flange portion 31b.

Finally, referring to FIG. 10, the inner flange portion 31b may be bent until being roughly parallel to the inner surface of the battery housing 20 by the riveting process. Accordingly, the second gasket part 42 in contact with the inner flange portion 31b of the terminal 30 may also be deformed until being roughly parallel to the inner surface of the battery housing 20. Here, since the length of the second gasket part 42 is configured to be slightly longer than the length of the inner flange portion 31b of the terminal 30, the space between the terminal 30 and the battery housing 20 may be reliably cut off by the second gasket part 42 even after the riveting process. Accordingly, electrical contact between the terminal 30 and the battery housing 20 may be effectively prevented.

As described above, since the gasket 40 is separately composed of the first gasket part 41 and the second gasket part 42, the process of assembling the gasket 40 into the narrow space between the terminal 30 and the battery housing 20 may be performed more easily. Additionally, the first gasket part 41 includes a ceramic filler, and thus, even when a thermal event or the like occurs in the battery cell 1, electrical contact between the terminal 30 and the battery housing 20 may be effectively prevented, thereby preventing a short circuit.

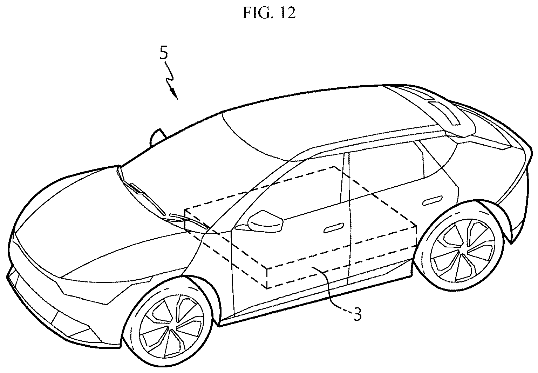

FIG. 11 is a view showing a battery pack according to an embodiment of the present disclosure, and FIG. 12 is a view showing a vehicle according to an embodiment of the present disclosure.

Referring to FIG. 11, a battery pack 3 according to an embodiment of the present disclosure may include at least one battery cell 1 of the present disclosure as described above. The battery cell 1 may be accommodated in a pack housing 2. The battery pack 3 may include components for electrical connection of the battery cells 1 and/or a battery management system (BMS) configured to control charging and discharging of the battery cells 1.

Next, referring to FIG. 12, a vehicle 5 according to an embodiment of the present disclosure includes at least one battery pack 3. The vehicle 5 may be configured to operate by receiving power from the battery pack 3. The vehicle 5 may be, for example, a hybrid vehicle (HEV) or an electric vehicle (EV).

The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

### [Explanation of Reference Signs]

1: battery cell
2: pack housing
3: battery pack
5: vehicle
10: electrode assembly
11: first uncoated portion
12: second uncoated portion
20: battery housing
30: terminal
31: first terminal portion
31a: electrical connection portion
31b: inner flange portion
32: second terminal portion
F: outer flange portion
33: third terminal portion
40: gasket
41: first gasket part
42: second gasket part

## Claims

1. A battery cell comprising:
an electrode assembly;
a battery housing configured to accommodate the electrode assembly through an opening provided on one side;
a terminal configured to be electrically connected to the electrode assembly through a closed portion provided on an opposite side of the opening of the battery housing; and
a gasket interposed between the terminal and the battery housing, configured to prevent electrical connection between the terminal and the battery housing, and comprising a ceramic filler.

2. The battery cell according to claim 1,
wherein the ceramic filler is configured to be sinterable under conditions of a predetermined temperature and a predetermined pressure.

3. The battery cell according to claim 1,
wherein the ceramic filler is sintered under conditions of a predetermined temperature and a predetermined pressure to form a ceramic filler network.

4. The battery cell according to claim 1,
wherein the gasket comprises at least one of Al₂O₃, SiO₂, B₂O₃, TiO (Titanium(II) oxide), and CaP (Calcium phosphate).

5. The battery cell according to claim 1,
wherein the gasket further comprises a polymer.

6. The battery cell according to claim 1,
wherein the gasket comprises:
a first gasket part exposed to the outside of the battery cell based on the closed portion of the battery housing; and
a second gasket part located on the inside of the battery cell based on the closed portion of the battery housing.

7. The battery cell according to claim 6,
wherein the first gasket part and the second gasket part are configured to be separable from each other.

8. The battery cell according to claim 6,
wherein an end surface of the first gasket part and an end surface of the second gasket part are configured to be aligned with each other.

9. The battery cell according to claim 6,
wherein the first gasket part comprises a ceramic filler.

10. The battery cell according to claim 6,
wherein the second gasket part comprises a polymer.

11. The battery cell according to claim 6,
wherein the second gasket part has elasticity.

12. The battery cell according to claim 6,
wherein the second gasket part comprises at least one of PBT, PP, PTFE, PPA, PFA, PEEK, PA and PS.

13. A gasket interposed between a terminal of a cylindrical battery cell and a battery housing and configured to prevent electrical connection between the terminal and the battery housing, the gasket comprising a ceramic filler.

14. A battery pack comprising at least one battery cell described in any one of claims 1 to 12.

15. A vehicle comprising at least one battery pack described in claim 14.
